# EUROPEAN PATENT SPECIFICATION

(11) **EP 1 524 855 B1**
(45) Date of publication and mention of the grant of the patent: **03.12.2008**
(21) Application number: 03741287.1
(22) Date of filing: 09.07.2003
(51) Int. Cl.: H04N 5/92, H04N 7/08, G11B 20/10, G11B 20/12, G11B 27/034

(54) **AUDIO-VIDEO DATA CONVERSION DEVICE AND METHOD**
AUDIO-VIDEO-DATENUMWANDLUNGSEINRICHTUNG UND -VERFAHREN
DISPOSITIF ET PROCEDE DE CONVERSION DE DONNEES AUDIO-VIDEO

(30) Priority: 11.07.2002 JP 2002202478
(43) Date of publication of application: 20.04.2005
(73) Proprietor: Panasonic Corporation, Kadoma-shi Osaka 571-8501 (JP)
(72) Inventor: KOBAYASHI, Hideto, Katano-shi, Osaka 576-0016 (JP)
(74) Representative: Eisenführ, Speiser & Partner
(86) International application number: PCT/JP2003/008689
(87) International publication number: WO 2004/008758

(56) References cited:
- EP-A- 1 195 767
- EP-A- 1 256 949
- JP-A- 2001 094 552
- JP-A- 2001 229 612
- JP-A- 2001 229 614
- JP-A- 2001 236 729
- JP-A- 2002 084 495
- JP-A- 2002 150 710
- JP-A- 2002 152 654
- JP-A- 2002 252 826
- US-B1- 6 370 198

## Description

### BACKGROUND OF THE INVENTION

### 1. Field of the Invention

The present invention relates to an AV data conversion apparatus and method for converting AV data compressed according to the MPEG standard, for example, to data conforming to the VR format and recording the converted AV data to an optical disc.

### 2. Description of Related Art

DVD-RAM and similar optical disc drives record AV data such as MPEG-encoded AV data according to the industry-standard Video Recording (VR) format for recording AV data. Files for storing AV data according to the VR format are called "VRO files", and conform to the MPEG standard. Some limitations are, however, applied to the MPEG standard in this case so that disc content can be edited in real time. This means that not all MPEG files are interchangeable with VRO files, and data conversion, including changing the pack size, to conform to the VR format is needed in order to record an MPEG file that is not compliant with the VR format.

A DVD-RAM recording apparatus is described for example in the US Patent US 6 370 198 B1.

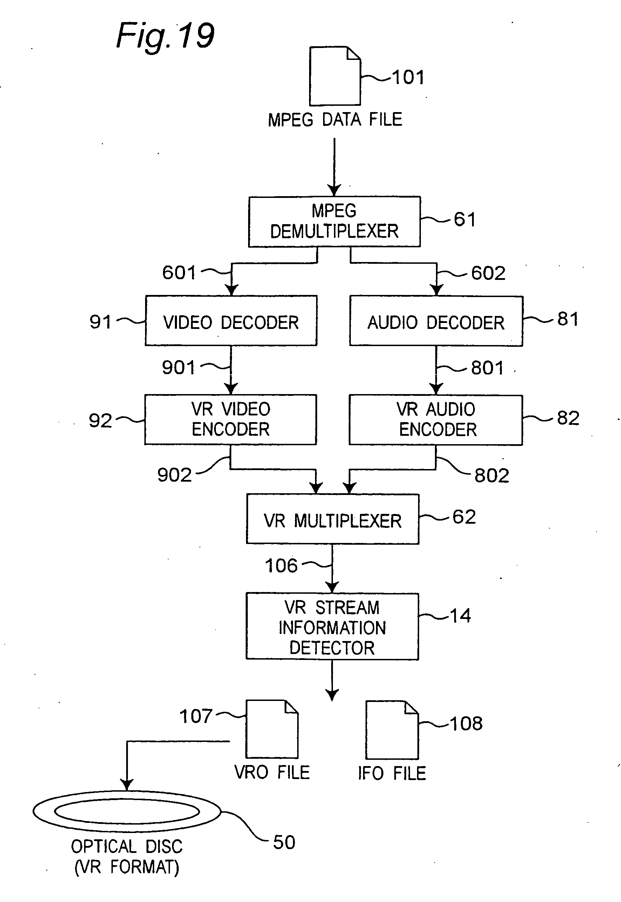

Fig. 19 is a block diagram of a conventional AV data converter for converting MPEG or other AV data to VR format data and then recording the resulting VR data. The AV data converter shown in Fig. 19 reads an MPEG-format data file 101 that is non-compliant with the VR format, converts the MPEG data file 101 to VR-compliant VRO data file 107 and IFO data file 108, and records the converted files to an optical disc 50. To accomplish this, the AV data converter has an MPEG demultiplexer 61, video decoder 91, VR video encoder 92, audio decoder 81, VR audio encoder 82, VR multiplexer 62, and VR stream information detector 14.

The MPEG demultiplexer 61 splits the read MPEG data file into a video elementary stream 601 and an audio elementary stream 602. The video decoder 91 then decodes the video elementary stream 601 into decoded video data 901, and the VR video encoder 92 then converts and re-encodes the decoded video data 901 to VR video stream 902.

The audio decoder 81 likewise decodes the audio elementary stream 602 to acquire decoded audio data 801, and the VR audio encoder 82 then converts and re-encodes the decoded audio data 801 to VR audio stream 802.

The VR multiplexer 62 then multiplexes the VR video stream 902 and VR audio stream 802 to a program stream compliant with the VR format, that is, VR-compliant MPEG data 106.

The VR stream information detector 14 then acquires the management information such as the stream VOBU (Video OBject Unit) information required by the VR format from this VR-compliant MPEG data 106. The VR stream information detector 14 then generates and records VR-compliant VRO data file 107 and IFO data file 108 to optical disc 50.

The operation of this AV data converter is described next.

When the AV data converter reads MPEG data file 101, the MPEG demultiplexer 61 demultiplexes the MPEG data file 101 into the video elementary stream 601 and audio elementary stream 602. The video elementary stream 601 is input to the video decoder 91 whereby it is decoded and converted to decoded video data 901. The decoded video data 901 is then passed to the VR video encoder 92, which converts it to a VR video elementary stream 902, that is, a video elementary stream defined by the VR format. The audio elementary stream 602 demultiplexed from the MPEG data file 101 by the MPEG demultiplexer 61 is similarly applied to the audio decoder 81 whereby it is decoded and converted to decoded audio data 801. This decoded audio data 801 is then converted by the VR audio encoder 82 to a VR audio elementary stream 802, that is, an audio elementary stream defined by the VR format.

The VR multiplexer 62 then multiplexes the VR video elementary stream 902 and VR audio elementary stream 802 to output VR-compliant MPEG data 106 to the VR stream information detector 14. VRO data file 107 and IFO data file 108 are then generated using the stream VOBU and other management information detected by the VR stream information detector 14 from the VR-compliant MPEG data 106.

A problem with this AV data converter of the prior art is that because all data in the read MPEG data file is decoded and all decoded data is then encoded according to the VR format, conversion takes a long time.

Another problem is that the original image quality and sound quality may not be retained in the converted AV data file depending upon the encoding conditions, and information is therefore lost.

Yet another problem is that because decoding and encoding are applied even when there is an error or other problem in the MPEG data file, a non-standard or corrupted data file that does not comply with the VR format is created and a noncompliant disc is produced.

### SUMMARY OF THE INVENTION

The present invention is directed to solving these problems, and an object of the invention is to provide an AV data conversion apparatus and method capable of quickly converting AV data with little loss of image quality or sound quality, and preventing creation of noncompliant discs.

To achieve this object, an audio-video AV data conversion apparatus according to the present invention has a verification file confirmation means for reading an AV data file containing AV data including video information and audio information, and a verification file denoting a compatibility of the audio-video data file with the video recording format, and for confirming if the AV data file and verification file match; a plurality of stream conversion means for changing the AV data to a specific format; and a conversion method determining means for selecting from among the plural stream conversion means at least one stream conversion means for converting the AV data to the specific video recording format based on the compatibility information in said verification file.

A stream conversion method converts an AV data file to a video recording VR-format. AV data file can thus be easily selected by creating and appending to the AV data file a verification file denoting the compatibility level of the AV data file with the VR format. This verification file can be created and appended to the AV data file at the time the AV data file is created. The verification file confirmation means confirms the correlation between the AV data file and verification file, and the stream conversion method determining means evaluates AV data file compatibility with the VR format based on the compatibility information contained in the verification file to select the appropriate stream conversion means.

The selected stream conversion means then re-encodes only the data that is not compliant with the VR format. Because VR-compliant data is thus not re-encoded, the conversion operation is fast with very little loss of image or sound quality.

Preferably, the AV data conversion apparatus reads a verification file containing AV data attributes from when the AV data file was created. The verification file confirmation means comprises an AV data attribute extraction means for extracting AV data attributes from the read AV data file, and a comparison means for comparing the AV data attributes extracted by the AV data attribute extraction means with the AV data attributes contained in the verification file. The stream conversion means converts the AV data to the specified format only when the comparison means confirms an attribute match.

If the verification file confirmation means determines that the AV data file does not conform to the verification file, stream conversion by the stream conversion means is prohibited and creating a disc that does not comply to the standard is prevented at an early stage in the process.

Yet further preferably, the AV data conversion apparatus of this invention reads a verification file containing VenderID information for uniquely identifying a device or software that created the AV data file, and the stream conversion means determines at least one stream conversion means based on VenderID information.

By pre-registering in the stream conversion means which conversion means is best for each VenderID, the best conversion means for a given AV data file can be selected based on the VenderID information in the verification file. Compatibility of an AV data file with the VR format depends upon the device or software used to create the AV data file. It is therefore desirable to set a VenderID for each device or software program, and correlate each VenderID to VR format compliance.

When the verification file confirmation means cannot read the verification file, the AV data conversion apparatus of this invention further preferably creates a verification file containing AV data attributes acquired by the AV data attribute extraction means and specific VenderID information corresponding to the AV data attributes.

This aspect of the invention creates a new verification file corresponding to the AV data attributes of the AV data file when the verification file cannot be read so that even AV data files for which there is no associated verification file can be converted.

A further aspect of the invention is an AV data conversion method having a first step of reading an audio-video AV data file containing AV data including video information and audio information, and a verification file denoting a compatibility of the audio-video data file with the video recording format; a second step of selecting at least one stream conversion method from among plural stream conversion methods for converting the AV data to the specific video recording format based on verification file content; and a third step of converting the AV data to a specific format by means of the at least one selected stream conversion method.

This method of the invention evaluates compliance with the VR format based on compatibility information contained in the verification file, and selects a stream conversion method appropriate to the compliance level indicated in the verification file. As a result, only data that is not compliant with the VR format is re-encoded, and VR-compliant data is not re-encoded. AV data files can therefore be converted quickly with little loss of video or sound quality.

Preferably, this AV data conversion method also has, after the first step and before the second step, a fourth step of confirming if the AV data file and verification file mutually correspond.

If the AV data file is determined to be a corrupt file not corresponding to the verification file, subsequent stream conversion is stopped and creating a non-standard disc can be prevented at an early stage in the process.

Yet further preferably, this AV data conversion method reads a verification file containing AV data attributes from when the AV data file was created. In addition, the fourth step further comprises a fifth step for extracting the AV data attributes when the AV data file was created from the read AV data file, and a sixth step for comparing the AV data attributes extracted by the fourth step with the AV data attributes contained in the verification file. The third step converts the AV data to the specified format only when a comparison result from the sixth step confirms an attribute match.

Creating a non-standard disc can thus be prevented at an early stage in the process because conversion by the stream conversion means is prohibited when the result of the fourth step is that the AV data file is an illegal AV data file not conforming to the verification file.

Yet further preferably, this AV data conversion method reads a verification file containing VenderID information uniquely identifying a device or software that created the AV data file, and the second step selects the conversion method based on this VenderID information.

By pre-registering in the stream conversion means which conversion means is best for each VenderID, the best conversion method for a given AV data file can be selected based on the VenderID information in the verification file.

An AV data conversion method according to another aspect of the invention has a first step of reading an AV data file containing AV data including video information and audio information; a second step of extracting AV data attributes from the read AV data file; a third step of creating a verification file corresponding to the extracted AV data attributes; a fourth step of selecting at least one stream conversion method from among plural stream conversion methods for changing the AV data to the specific format based on verification file content; and a fifth step of converting the AV data to the specific format by applying the at least one selected stream conversion method.

This aspect of the invention creates a new verification file corresponding to the AV data attributes of the AV data file when the verification file cannot be read so that even AV data files for which there is no associated verification file can be converted.

A further aspect of the invention is a computer-readable recording medium storing an AV data conversion program of this invention for executing on a computer the steps of the AV data conversion method. The recording medium could be an optical recording medium, magnetic recording medium, semiconductor recording medium, or other type recording medium.

An AV data conversion program according to the present invention is a program for executing on a computer the steps of an AV data conversion method according to this invention. This AV data conversion program can be distributed on a recording medium or over the Internet or other digital communication medium.

It will thus be apparent that an AV data conversion apparatus according to the present invention decodes and encodes only data that is compatible with the VR format based on a VenderID or other information contained in a verification file. As a result, the present invention can convert AV data faster and with less loss of image quality or sound quality when compared with a conventional AV data conversion system that decodes and encodes all data.

Producing a non-compliant disc can also be prevented at an earlier stage in the process because information contained in the verification file and information contained in the AV data file are compared, and data file conversion is stopped if an error is detected in the AV data file.

Other objects and attainments together with a fuller understanding of the invention will become apparent and appreciated by referring to the following description and claims taken in conjunction with the accompanying drawings.

### BRIEF DESCRIPTION OF THE DRAWINGS

The present invention will become readily understood from the following description of preferred embodiments thereof made with reference to the accompanying drawings, in which like parts are designated by like reference numeral, and in which:
Fig. 1 is a block diagram of an AV data conversion apparatus according to a first embodiment of the present invention;
Fig. 2 is a block diagram showing an example of an AV data conversion apparatus according to a first embodiment of the invention;
Fig. 3 is a block diagram showing the configuration of the video capturing means shown in Fig. 2;
Fig. 4 is a flow chart describing operation of the AV data conversion apparatus according to a first embodiment of the invention;
Fig. 5A is a schematic diagram of information contained in a VR-compatibility verification file;
Fig. 5B shows steps executed by the VR verification file confirmation means;
Fig. 6A is an example of a stream conversion means compatibility table;
Fig. 6B describes the stream conversion method determining means;
Fig. 7 is a block diagram describing operation of the 0-th stream conversion means 51;
Fig. 8 is a block diagram describing operation of the 1 st stream conversion means 13a;
Fig. 9 is a block diagram describing operation of the 2nd stream conversion means 13b;
Fig. 10 is a block diagram describing operation of the 3rd stream conversion means 13c;
Fig. 11 is a block diagram describing operation of the 4th stream conversion means 13d;
Fig. 12 is a detailed block diagram of the loss-of-synchronization detection means and audio data correction means shown in Fig. 11;
Fig. 13 is a block diagram describing operation of the 5th stream conversion means 13e;
Fig. 14 is a block diagram describing operation of the 6th stream conversion means 13f;
Fig. 15 is a block diagram describing operation of the 7th stream conversion means 13g;
Fig. 16 is a block diagram describing operation of the 8th stream conversion means 13h;
Fig. 17 is a block diagram of an AV data conversion apparatus according to a second embodiment of the invention;
Fig. 18 is a flow chart of the operation of the AV data conversion apparatus according to the second embodiment of the invention; and
Fig. 19 is a block diagram of an AV data conversion apparatus according to the prior art.

### DETAILED DESCRIPTION OF THE PREFERRED EMBODIMENTS

Preferred embodiments of the present invention are described below with reference to the accompanying figures. Note that like reference numerals in the figures denote identical components or components performing identical actions and operations.

### Embodiment 1

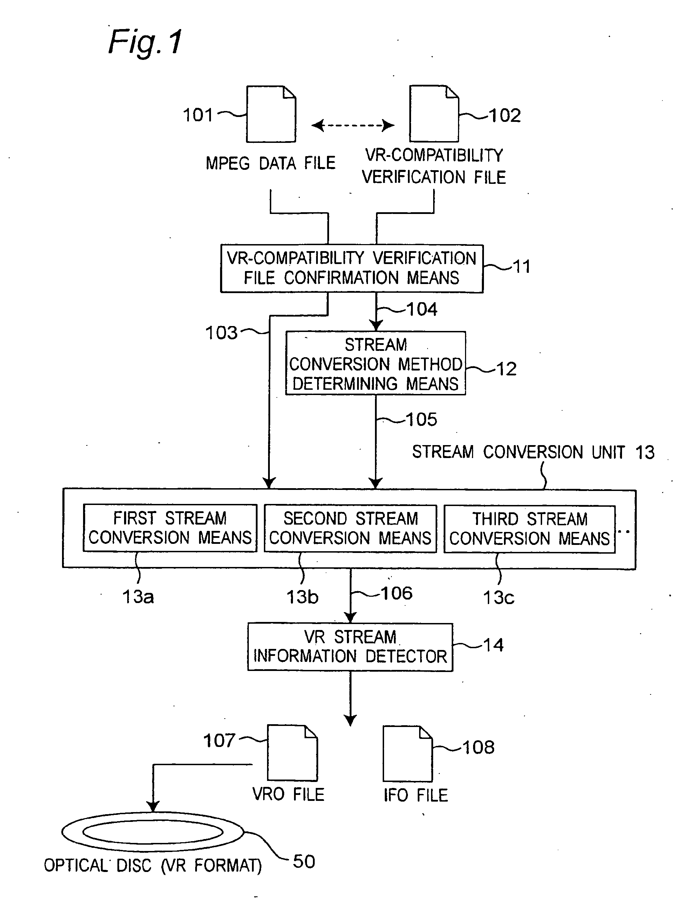

Fig. 1 is a block diagram of an AV data conversion apparatus according to a first embodiment of the present invention. As shown in Fig. 1, this AV data conversion apparatus reads an MPEG data file 101 and a VR-compatibility verification file 102 corresponding to the MPEG data file 101, and produces VR-format VRO file 107 and IFO file 108 through a stream conversion operation. As will also be known from Fig. 1, this AV data conversion apparatus has a VR-compatibility verification file confirmation means 11, stream conversion method determining means 12, stream conversion unit 13 containing at least one stream conversion means, and VR stream information detector 14.

The IFO file is a management information file containing information relating to the recorded MPEG stream. This information includes, for example, the size and total number of GOP (data compression unit) objects, the size of each recorded data block, and the video signal resolution. The IFO file also contains the results of simple editing operations based on the VR format.

The operation of each component of the AV data conversion apparatus is described next.

The VR-compatibility verification file confirmation means 11 first confirms whether the MPEG data file 101 conforms to the VR-compatibility verification file 102. The VR-compatibility verification file is paired with an MPEG data file and is used to verify the MPEG data file, and includes MPEG data video attributes and audio attributes, and information about the compatibility of MPEG data contained in the MPEG data file with the VR format.

If the VR-compatibility verification file confirmation means 11 verifies that the MPEG data file is compatible with the VR format (referred to below as "VR compliant"), the VR-compatibility verification file confirmation means 11 outputs the verified MPEG stream data 103 to the stream conversion unit 13, and outputs the MPEG verification data 104 acquired from the VR-compatibility verification file 102 to the stream conversion method determining means 12.

Based on the MPEG verification data 104, the stream conversion method determining means 12 determines the best stream conversion means of the stream conversion unit 13, and applies stream conversion means identifier 105 to the stream conversion unit 13.

In this embodiment of the invention the stream conversion unit 13 includes first stream conversion means 13a, second stream conversion means 13b, and third conversion means 13c, each performing a different stream conversion function. Which of these stream conversion means is used to convert the MPEG data file is selected based on the stream conversion means identifier 105. The stream conversion unit 13 then converts the verified MPEG stream data 103 to VR-compliant MPEG stream data 106, that is, an MPEG data stream that is compatible with the VR format.

The VR stream information detector 14 then detects the stream VOBU and other management information required by the VR format from the VR-compliant MPEG data, and generates VR-compliant VRO file 107 and IFO file 108.

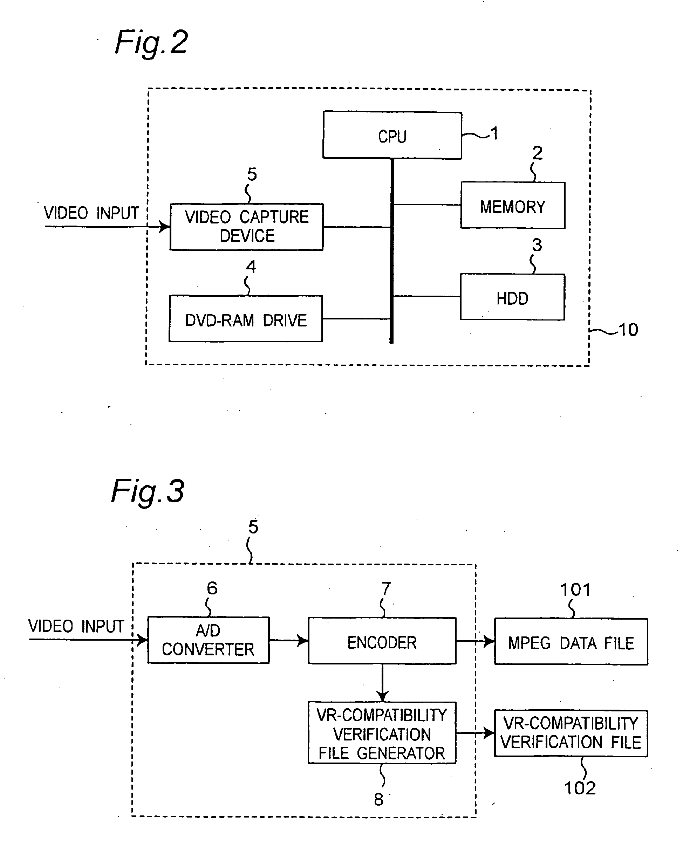

The functions of the present invention shown in Fig. 1 can be rendered by a computer program executed by a personal computer, for example. Fig. 2 is a block diagram showing the configuration of a personal computer 10 for executing the method of the present invention by means of a CPU 1, memory 2, hard disk drive 3, DVD-RAM drive 4, and video capture device 5. The CPU 1 reads and runs a computer program stored in memory 2 or hard disk drive 3. This computer program is typically distributed via a recording medium, but could be distributed via a digital communication network. The configuration of the video capture device 5 is described next with reference to Fig. 3.

The video capture device 5 has an A/D converter 6, encoder 7, and VR-compatibility verification file generator 8. The A/D converter 6 converts video input to the video capture device 5 to digital image data, and the encoder 7 then MPEG-encodes the digital image data to output MPEG data file 101. The VR-compatibility verification file generator 8 also generates VR-compatibility verification file 102 containing information about the compatibility of the MPEG data file 101 with the VR format. Compatibility with the VR format depends on the characteristics of the encoder 7. These characteristics differ according to the manufacturer and system design of the encoder 7. As a result, this embodiment of the invention adds a VenderID identifying the encoder 7 manufacturer as the compatibility information in the VR-compatibility verification file 102. It will be obvious to one with ordinary skill in the related art that this VenderID shall not necessarily identify the manufacturer, and could instead be a unique ID determined by the characteristics of the encoder 7. The encoder 7 could further be either a software or a hardware construction, and the VenderID predetermined for each encoder 7 or video capture device 5 can be added to the VR-compatibility verification file 102. The VenderID could also be added according to the output MPEG data file 101.

The personal computer 10 acquires the MPEG data file 101 and VR-compatibility verification file 102 from the video capture device 5. The MPEG data file 101 is written to memory 2, and the program run by the CPU 1 converts the MPEG stream data 103 contained in the MPEG data file 101 to VR-compliant MPEG data 106 which is then written to DVD-RAM by the DVD-RAM drive 4, producing a VR-format optical disc 50. It should be noted that the personal computer 10 of this embodiment has a video capture device 5, but the video capture device 5 is not required as long as there is means for acquiring a MPEG data file 101 and VR-compatibility verification file 102 set. There could, for example, be a network connection enabling the AV data conversion method described above to be executed using an MPEG data file 101 and paired VR-compatibility verification file 102 acquired from another device on the network.

The present invention can also be rendered in a DVD recorder having the construction shown in Fig. 2 built in. In this case the program run by the CPU 1 can be stored to memory 2 or hard disk drive 3. The memory 2 could be ROM (read-only memory) or RAM (random access memory), and the program could be stored in a ROM device. This ROM device could be flash memory, and the program recorded to flash memory can be overwritten with a program obtained from a communication network or recording medium.

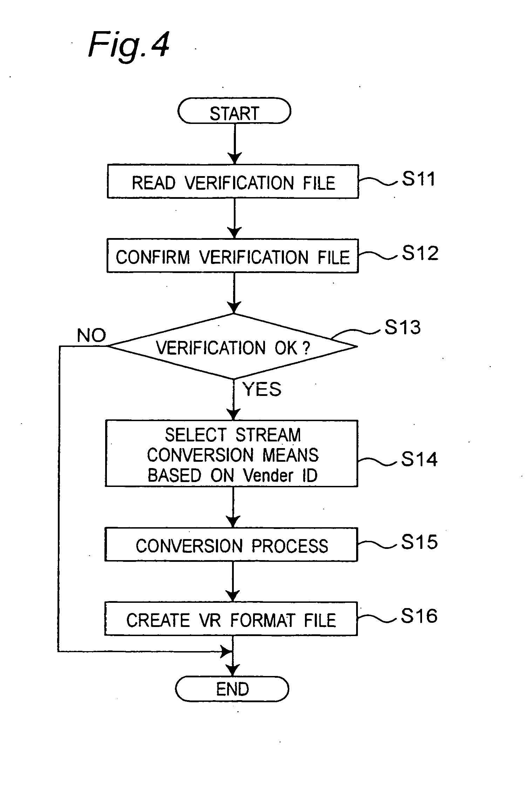

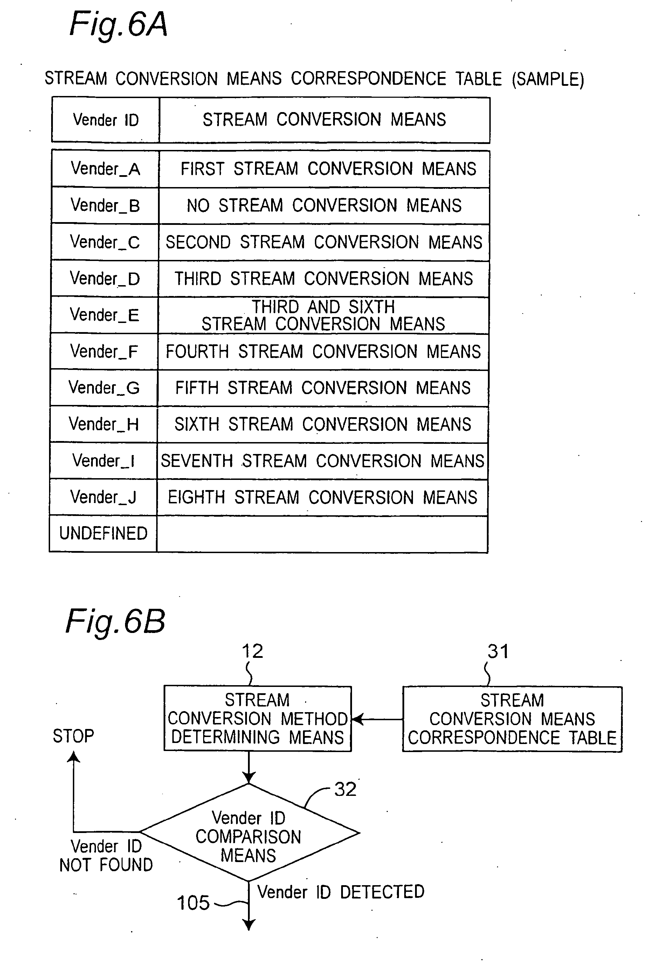

The AV data conversion method of this invention is described step by step next with reference to Fig. 4.
(a) The VR-compatibility verification file confirmation means 11 first reads MPEG data file 101 and VR-compatibility verification file 102 (S11).
(b) The VR-compatibility verification file confirmation means 11 then gets the MPEG verification information from the read VR-compatibility verification file 102 (S12).
(c) Whether the MPEG data file 101 matches the VR-compatibility verification file 102 is then verified based on the content of the MPEG verification information (S13).
(d) If the MPEG data file 101 and VR-compatibility verification file 102 match, the stream conversion method determining means 12 selects the stream conversion unit 13 from the stream conversion means correspondence table based on the VenderID contained in the MPEG verification information (S14). For example, if the VenderID is Vender_C, second stream conversion means 13b is selected by referencing the table shown in Fig. 6A, and third conversion means 13c is selected if the VenderID is Vender_D. If the VenderID in the MPEG verification information is not found in the stream conversion means correspondence table, the process ends as shown in Fig. 6 (b).
(e) The selected stream conversion unit 13 then applies the VR conversion process to the MPEG stream data 103 in the MPEG data file 101 (S15).
(f) The VR stream information detector 14 then acquires the VOBU and other management information required by the VR format from the VR-compliant MPEG data 106, and generates the VR-compliant VRO file 107 and IFO file 108 (S16).

The original MPEG data file 101 is thus output as VR-compliant MPEG stream data 106 as a result of these steps.

The AV data conversion method described above can also be executed as a computer program.

Operation of an AV data conversion apparatus according to this embodiment of the invention is described next with reference to the flow chart in Fig. 4.

The VR-compatibility verification file confirmation means 11 first reads the MPEG data file 101 and VR-compatibility verification file 102 (S11).

Based on the content of the read VR-compatibility verification file 102, the VR-compatibility verification file confirmation means 11 then verifies if the MPEG data file 101 corresponds to the VR-compatibility verification file 102 (S12, S13).

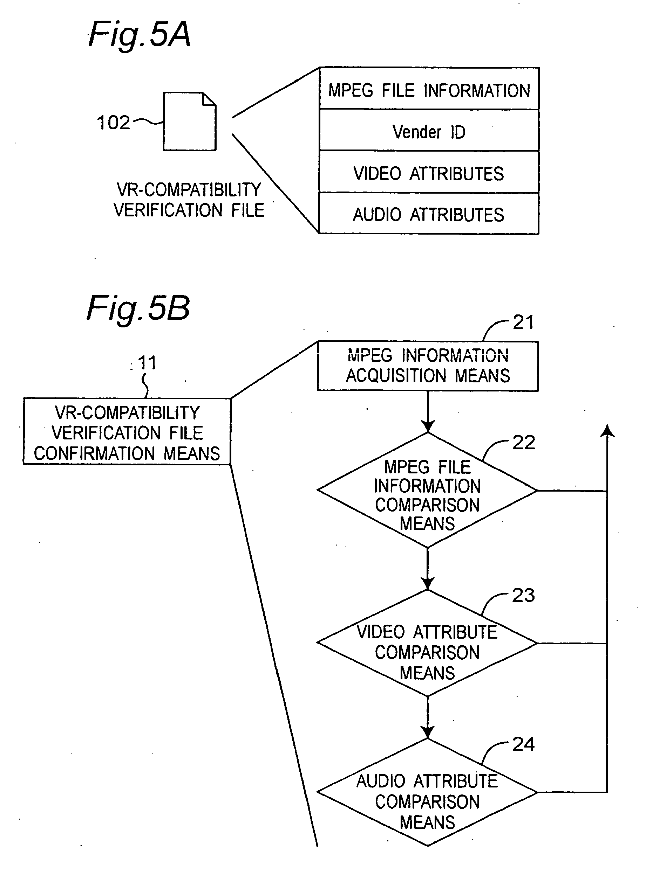

The operation of the VR-compatibility verification file confirmation means 11 at this time is described in detail with reference to Fig. 5. As shown in Fig. 5A, the VR-compatibility verification file 102 is composed of, for example, MPEG file information denoting the file name and file size, a VenderID denoting the type of system that produced the MPEG file, video attributes indicating the resolution and other attributes of the video content, and audio attributes indicating such information as the audio bitrate. Note that the file information, video attributes, and audio attributes are collectively referred to as the AV data attributes.

Fig. 5 (b) describes operation of the VR-compatibility verification file confirmation means 11. As shown in Fig. 5 (b) this VR-compatibility verification file confirmation means 11 is composed of an MPEG information acquisition means 21, MPEG file information comparison means 22, video attribute comparison means 23, and audio attribute comparison means 24.

The MPEG information acquisition means 21 gets the file information, video attributes, and audio attributes from the AV data attributes of the MPEG data file. The MPEG file information comparison means 22 then determines if the filename, size, date, and other file attributes of the MPEG data file match the file information of the MPEG data file. The video attribute comparison means 23 likewise determines if the video resolution and other video attributes match, and the audio attribute comparison means 24 determines if the audio bitrate and other audio attributes match.

The VR-compatibility verification file 102 contains the MPEG file information, VenderID, video attributes, and audio attributes at specific locations in a known file format.

The MPEG information acquisition means 21 gets the MPEG file information, video attributes, and audio attributes from the MPEG data file. The MPEG file information comparison means 22 determines if the MPEG file information acquired from the MPEG data file matches the MPEG file information of the VR-compatibility verification file, and stops the stream conversion process if a match is not confirmed. The video attribute comparison means 23 determines if the video attributes acquired from the MPEG data file match the video attributes of the VR-compatibility verification file, and stops the stream conversion process if a match is not confirmed. The audio attribute comparison means 24 likewise determines if the audio attributes from the MPEG data file match the audio attributes of the VR-compatibility verification file (S13), and stops the stream conversion process if a match is not confirmed. The stream conversion process thus continues and MPEG verification information storing the MPEG stream data and VenderID is output only if all information matches.

The MPEG verification information output from the VR-compatibility verification file confirmation means 11 is input to the stream conversion method determining means 12. Operation of the stream conversion method determining means 12 is described next with reference to Figs. 6A and 6B.

Fig. 6A shows a sample stream conversion means correspondence table. This stream conversion means correspondence table records which conversion process should be run for a particular VenderID in the VR-compatibility verification file. Fig. 6B describes the operation of the stream conversion method determining means 12.

The stream conversion method determining means 12 references the stream conversion means correspondence table 31, and the VenderID comparison means 32 compares the VenderID in the VR-compatibility verification file with the VenderIDs in the stream conversion means correspondence table 31.

When the MPEG verification information is input to the stream conversion method determining means 12, the stream conversion means is selected from the stream conversion means correspondence table based on the VenderID contained in the MPEG verification information (S14). Using the stream conversion means correspondence table shown in Fig. 6 by way of example, second stream conversion means 13b is selected if the VenderID is Vender_C, and third conversion means 13c is selected if the VenderID is Vender_D. Likewise, third stream conversion means 13c and sixth stream conversion means 13f are selected if the VenderID is Vender_E, fourth stream conversion means 13d is selected if Vender_F, fifth stream conversion means 13e is selected if Vender_G, sixth stream conversion means 13f is selected if Vender-H, seventh stream conversion means 13g if Vender_I, and eighth stream conversion means 13h is selected if Vender_J. Processing stops as shown in Fig. 6 (b) if the VenderID contained in the MPEG verification information is not found in the stream conversion means correspondence table.

The stream conversion method determining means 12 then inputs the stream conversion means selection to the stream conversion unit 13. Using the selected stream conversion means 13a to 13h, the stream conversion unit 13 applies the appropriate conversion process to the verified MPEG stream data 103 (S15).

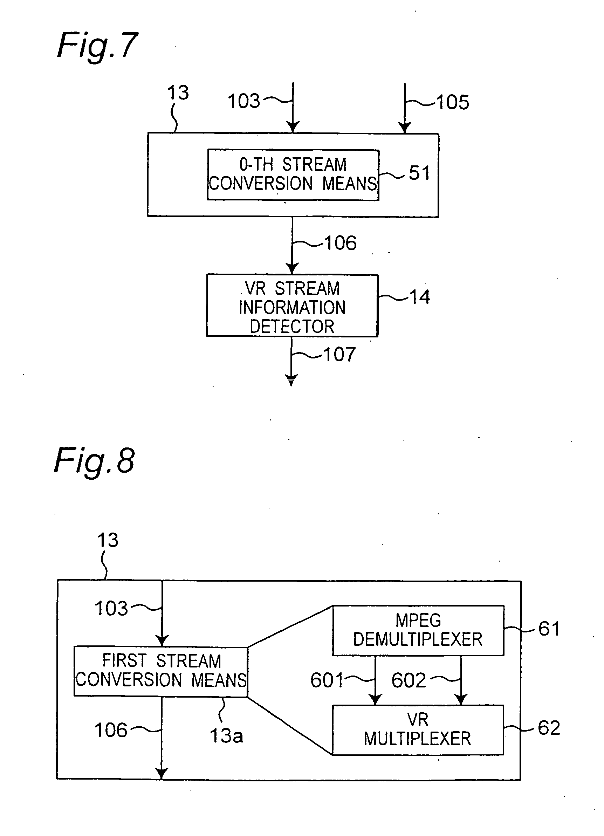

Operation of the stream conversion unit 13 is described in detail next with reference to Fig. 7 to Fig. 16.

If stream conversion is unnecessary because the input verified MPEG stream data 103 is highly compliant with the VR format, the stream conversion unit 13 selects the 0-th stream conversion means 51. This situation corresponds to a VenderID of Vender_B in the table shown in Fig. 6A. The 0-th stream conversion means 51 then outputs the input verified MPEG stream data 103 as VR-compliant MPEG stream data 106 without further processing as shown in Fig. 7.

If the input verified MPEG stream data 103 is VR format compliant on the video and audio elementary stream level but not compatible on the multiplex level, the stream conversion unit 13 selects first stream conversion means 13a (equivalent to a VenderID of Vender_A in Fig. 6). This first stream conversion means 13a is described with reference to Fig. 8.

The first stream conversion means 13a has an MPEG demultiplexer 61 and VR multiplexer 62. The MPEG demultiplexer 61 demultiplexes the verified MPEG stream data 103 into the video elementary stream 601 and audio elementary stream 602. The VR multiplexer 62 then combines the video elementary stream 601 and audio elementary stream 602 to the VR-compliant MPEG stream data 106 of a VR program stream.

The MPEG demultiplexer 61 of the first stream conversion means 13a demultiplexes the input verified MPEG stream data 103 into the video elementary stream 601 and audio elementary stream 602. The VR multiplexer 62 then converts these elementary streams to the VR format by, for example, converting the pack size to 2048 bytes, and thus outputs VR-compliant MPEG stream data 106.

It will thus be apparent from Fig. 8 that when the input verified MPEG stream data 103 is compatible with the VR format on the video and audio elementary stream level, the first stream conversion means 13a converts the verified MPEG stream data 103 to VR-compliant MPEG stream data 106 by simply multiplexing the elementary streams without decoding or encoding the streams.

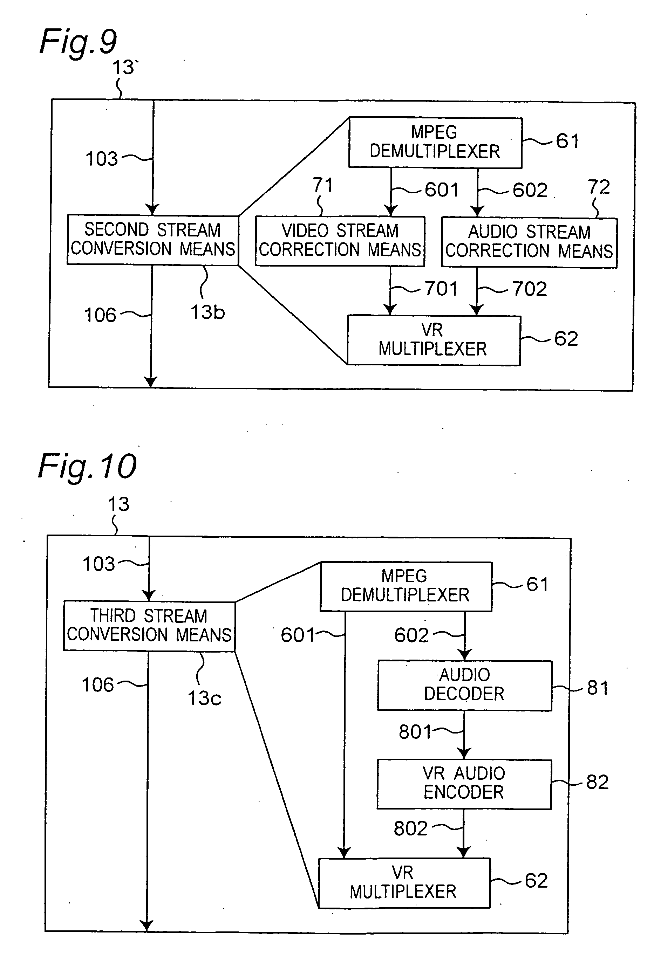

If the input verified MPEG stream data 103 is compatible with the VR format on the video and audio elementary stream level except for some selected flags, the stream conversion unit 13 selects second stream conversion means 13b (equivalent to a VenderID of Vender_C in Fig. 6). Operation of the second stream conversion means 13b is described next with reference to Fig. 9.

As shown in Fig. 9, the second stream conversion means 13b is composed of MPEG demultiplexer 61, VR multiplexer 62, video stream correction means 71, and audio stream correction means 72. The video stream correction means 71 corrects the video elementary stream 601 so that it is compatible with the VR format on the video elementary stream level, and thus outputs corrected video elementary stream 701. The audio stream correction means 72 corrects the audio elementary stream 602 so that it is compatible with the VR format on the audio elementary stream level, and thus outputs corrected audio elementary stream 702.

The second stream conversion means 13b thus splits the input verified MPEG stream data 103 into video elementary stream 601 and audio elementary stream 602 by means of MPEG demultiplexer 61. The video stream correction means 71 then changes or deletes particular flags in the video elementary stream 601 according to the VR format, and the audio stream correction means 72 likewise changes or deletes particular flags in the audio elementary stream 602 according to the VR format. The VR multiplexer 62 then converts the MPEG-2 program stream conforming to the VR format to 2048-byte packs, for example, and outputs VR-compliant MPEG stream data 106.

The second stream conversion means 13b runs a conversion process for cases in which the values of only some flags in the video and audio of the input MPEG data file are incompatible with the VR format. If only the display resolution of the MPEG data is not compatible with the VR format, for example, the MPEG data can be converted to VR-format stream data by changing only the data relating to the display resolution contained in the video elementary stream isolated by the demultiplexer, and full decoding and encoding are therefore not necessary.

If the input verified MPEG stream data 103 is VR-compliant on the video elementary stream level, the stream conversion unit 13 selects the third stream conversion means 13c (corresponding to a VenderID of Vender_D in Fig. 6). Operation of the third stream conversion means 13c is described with reference to Fig. 10.

As shown in Fig. 10 the third stream conversion means 13c has a MPEG demultiplexer 61, VR multiplexer 62, audio decoder 81, and VR audio encoder 82. The audio decoder 81 decodes the audio elementary stream 602 and outputs decoded audio data 801. The VR audio encoder 82 then encodes the decoded audio data 801 to VR-format VR audio elementary stream 802.

The input verified MPEG stream data 103 is demultiplexed by the MPEG demultiplexer 61 of the third stream conversion means 13c to video elementary stream 601 and audio elementary stream 602. The audio elementary stream 602 is then decoded by the audio decoder 81. The decoded audio data 801 is then encoded by the VR audio encoder 82 to a VR audio elementary stream 802 as defined by the VR format. The VR multiplexer 62 then converts the VR-compliant MPEG-2 program stream to 2048-byte packs, for example, and outputs VR-compliant MPEG stream data 106.

If only the audio portion of the input MPEG data file 101 is incompatible with the VR format, a VR-compliant MPEG stream data 106 can be output by re-encoding only the audio portion instead of re-encoding all data.

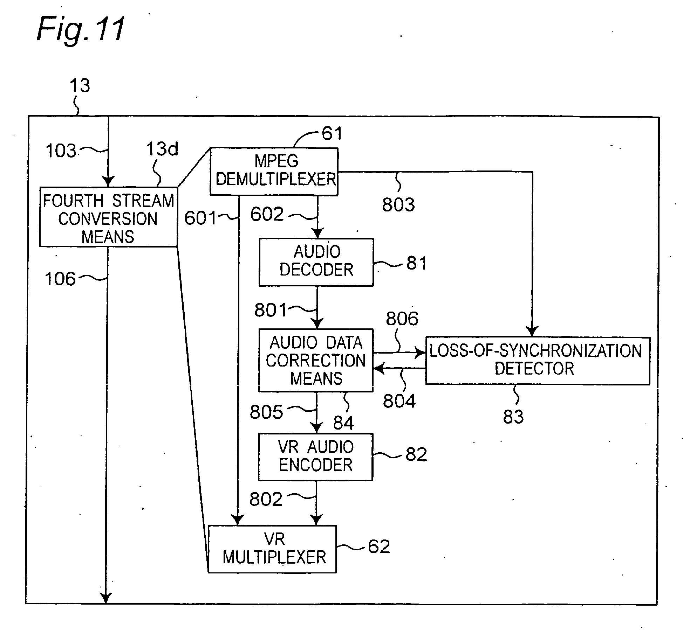

If the input verified MPEG stream data 103 is VR compliant at the video elementary stream level but AV synchronization is off, the stream conversion unit 13 selects the fourth stream conversion means 13d (equivalent to a VenderID of Vender_F in Fig. 6A). Operation of the fourth stream conversion means 13d is described next with reference to Fig. 11.

As shown in Fig. 11 the fourth stream conversion means 13d has MPEG demultiplexer 61, VR multiplexer 62, audio decoder 81, VR audio encoder 82, loss-of-synchronization detector 83, and audio data correction means 84. The loss-of-synchronization detector 83 compares video time information 803 and audio time information 806 to detect any offset in the video and audio playback times, and outputs audio correction information 804 denoting how much to correct the audio data. The audio data correction means 84 then adjusts the data size of the decoded audio data 801 according to the correction specified by the audio correction information 804, and outputs AV-synchronization-corrected audio data 805. The audio component of the AV-synchronization-corrected audio data 805 is corrected to resynchronize the video and audio.

The MPEG demultiplexer 61 of the fourth stream conversion means 13d demultiplexes the input verified MPEG stream data 103 into the video elementary stream 601 and audio elementary stream 602, and outputs AV synchronization data 803, 806 containing a Presentation Time Stamp (PTS), that is, time information for synchronizing video and audio playback. Based on the AV synchronization data 803, 806, the loss-of-synchronization detector 83 detects any offset between the video and audio, and outputs audio correction information 804. Based on this audio correction information 804, the audio data correction means 84 adjusts the data size of the decoded audio data 801, and outputs AV-synchronization-corrected audio data 805, that is, the audio data after correcting it to synchronize with the video. This AV-synchronization-corrected audio data 805 is then encoded by the VR audio encoder 82 to a VR audio elementary stream 802. The VR multiplexer 62 then multiplexes the data according to the VR format and outputs VR-compliant MPEG stream data 106.

When re-encoding the audio part of input MPEG data file 101 could cause a loss of synchronization between the video and audio, the MPEG data file 101 can be converted to synchronized VR-format data by increasing or decreasing the audio data according to the video data.

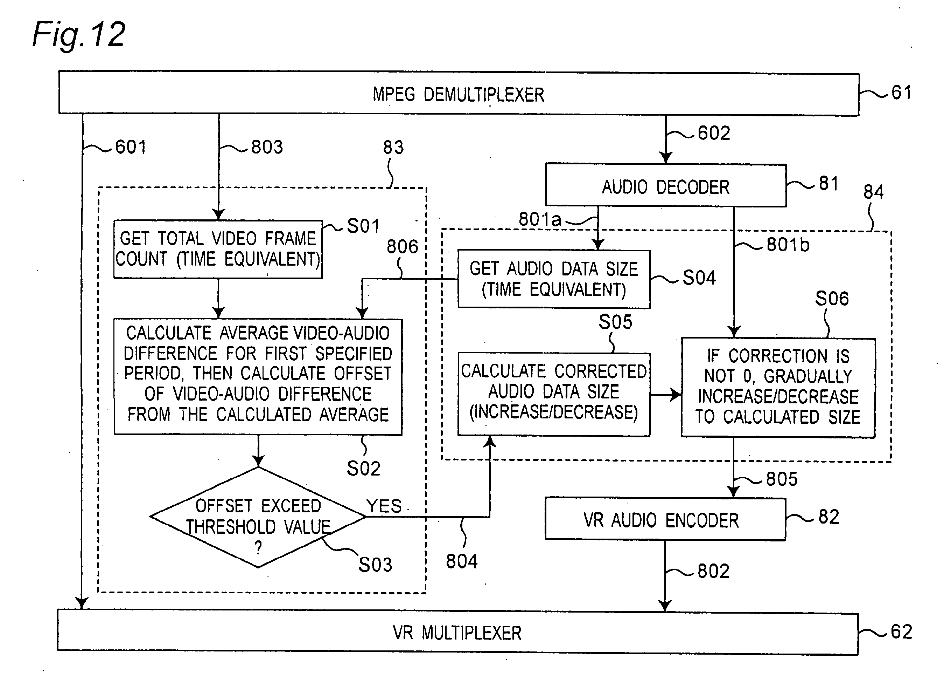

This synchronization correction method is described in further detail with reference to Fig. 12. Fig. 12 is a detailed block diagram of the loss-of-synchronization detector 83 and audio data correction means 84.
(1) The MPEG demultiplexer 61 demultiplexes the input verified MPEG stream data 103 into the video elementary stream 601 and audio elementary stream 602. The MPEG demultiplexer 61 also outputs AV synchronization information 803 containing the PTS or other time information enabling synchronized playback of the video and audio.
(2) The loss-of-synchronization detector 83 then acquires the total video frame count (time equivalent) as the AV synchronization information 803 (S01).
(3) The average difference between the video and audio is then calculated for a predetermined period. The offset between this average and the difference between the video and audio is then calculated (S02). This step is necessary because the average difference calculated in the first predetermined period will vary according to the current environment.
(4) Whether this difference exceeds a specified threshold value is then determined (S03). If the difference exceeds the threshold value, the audio correction information 804 is sent to the audio data correction means 84.
(5) The audio data correction means 84 acquires the decoded audio data 801 a and audio data size (time-equivalent) 806 from the audio decoder 81 (S04).
(6) The loss-of-synchronization detector 83 acquires the audio correction information 804 from the loss-of-synchronization detector, and calculates the required audio data correction (S05).
(7) If the audio data correction required for decoded audio data 801 b is a non-zero value, the audio data size is increased or decreased accordingly (S06). Adjusting the audio data at once can cause the audio to skip or sound unnatural after conversion is completed, and a gradual adjustment in the audio data size is therefore desirable. The data is downsampled at specified intervals in order to reduce the amount of data, and data is duplicated at specified intervals to gradually increase the amount of audio data. This operation continues until the specified desired audio data correction is achieved.
   Note that this synchronization correction method is described in further detail in International Application PCT/JP02/05108 (WO 02/097817), incorporated herein by reference.
(8) AV-synchronization-corrected audio data 805 corrected to synchronize with the video stream is output to the VR audio encoder 82.
(9) The VR audio encoder 82 then encodes the AV-synchronization-corrected audio data 805 to a VR audio elementary stream 802.
(10) The VR multiplexer 62 then converts the video elementary stream 601 and VR audio elementary stream 802 to conform to the VR format, thereby outputting VR-compliant MPEG stream data 106.

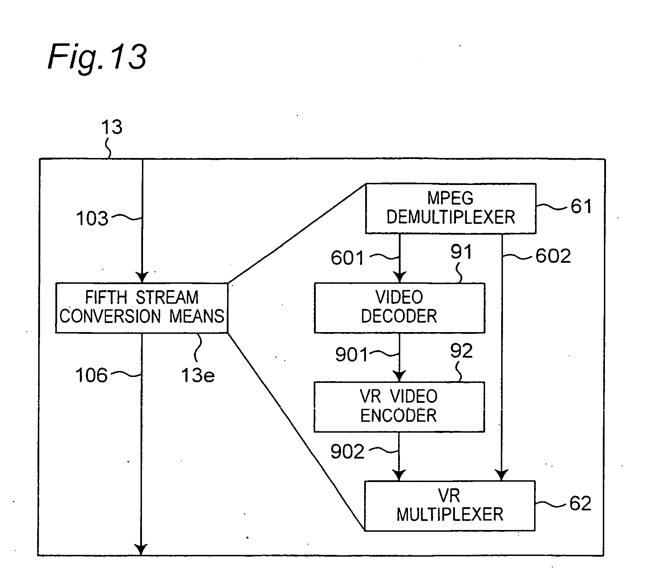

If the verified MPEG stream data 103 is VR-compliant at the audio elementary stream level but not at the video elementary stream level, the stream conversion unit 13 selects the fifth stream conversion means 13e (equivalent to a VenderID of Vender_G in the correspondence table shown in Fig. 6A). This fifth stream conversion means 13e is described next with reference to Fig. 13.

As shown in Fig. 13 the fifth stream conversion means 13e is composed of a MPEG demultiplexer 61, VR multiplexer 62, video decoder 91, and VR video encoder 92. The video decoder 91 decodes the video elementary stream 601 and outputs decoded video data 901. The VR video encoder 92 encodes the decoded video data 901 and outputs VR video elementary stream 902.

The MPEG demultiplexer 61 of fifth stream conversion means 13e demultiplexes the input verified MPEG stream data 103 to video elementary stream 601 and audio elementary stream 602. The video decoder 91 then decodes the video elementary stream 601. The VR video encoder 92 then encodes the decoded video data 901 to a VR video elementary stream 902. The VR multiplexer 62 then converts the VR video elementary stream 902 according to the VR format, and outputs VR-compliant MPEG stream data 106.

An MPEG data file in which only the video component is not compliant with the VR format can thus be converted to a VR-compliant AV data stream by re-encoding only the video portion rather than re-encoding all data.

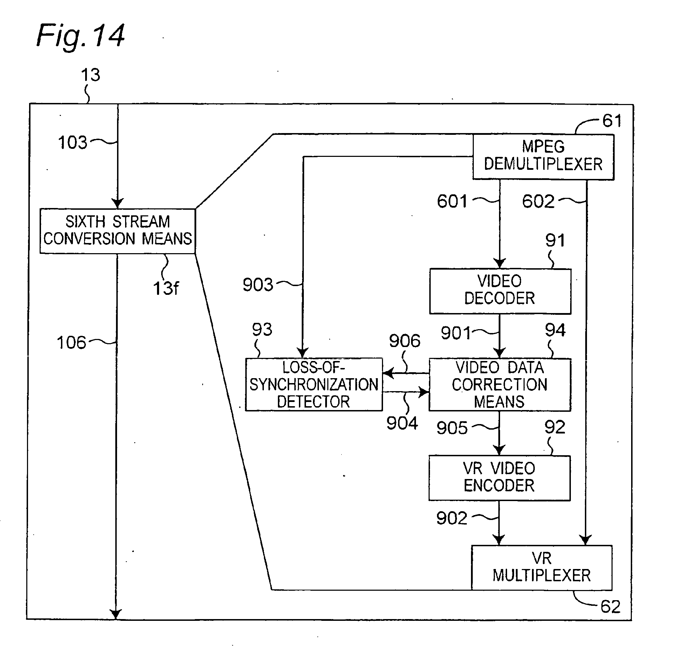

If the input verified MPEG stream data 103 is compatible with the VR format at the audio elementary stream level but audio synchronization is lot, the stream conversion unit 13 selects the sixth stream conversion means 13f (corresponding to a VenderID of Vender_H in the correspondence table shown in Fig. 6A). This sixth stream conversion means 13f is described below with reference to Fig. 14.

As shown in Fig. 14, the sixth stream conversion means 13f is composed of a MPEG demultiplexer 61, VR multiplexer 62, video decoder 91, VR video encoder 92, loss-of-synchronization detector 93, and video data correction means 94.

The loss-of-synchronization detector 93 compares the audio time information 903 and video time information 906 to detect the difference between the video and audio playback times, and outputs video data correction information 904 denoting the required video data correction. The video data correction means 94 then adjusts the video data size according to the video correction indicated by the video data correction information 904, and outputs AV-synchronization-corrected video data 905. The video data of the AV-synchronization-corrected video data 905 is adjusted to synchronize the video with the audio. It should be noted that the detailed operation of the loss-of-synchronization detector 93 and video data correction means 94 is the same as the operation of the audio data correction means, and further description thereof is thus omitted.

The MPEG demultiplexer 61 of the sixth stream conversion means 13f demultiplexes the verified MPEG stream data 103 into the video elementary stream 601 and audio elementary stream 602, and outputs AV synchronization information 903, 906 including a PTS or other time information enabling synchronized playback of the video and audio.

The loss-of-synchronization detector 93 detects a loss of synchronization between the video and audio based on the AV synchronization information 903, 906, and outputs video data correction information 904. Based on this video data correction information 904, the video data correction means 94 adjusts the size of the decoded video data 901, and outputs AV-synchronization-corrected video data 905, which has been corrected for synchronization with the audio. This AV-synchronization-corrected video data 905 is encoded by the VR video encoder 92 to a VR video elementary stream 902. The VR multiplexer 62 then converts the video and audio to output VR-compliant MPEG stream data 106.

This method of the invention can thus convert an input MPEG data file to a VR-compliant data file free of synchronization errors by adjusting the video data size to the audio data when synchronization between the video and audio can be lost by re-encoding the video portion of an input MPEG data file.

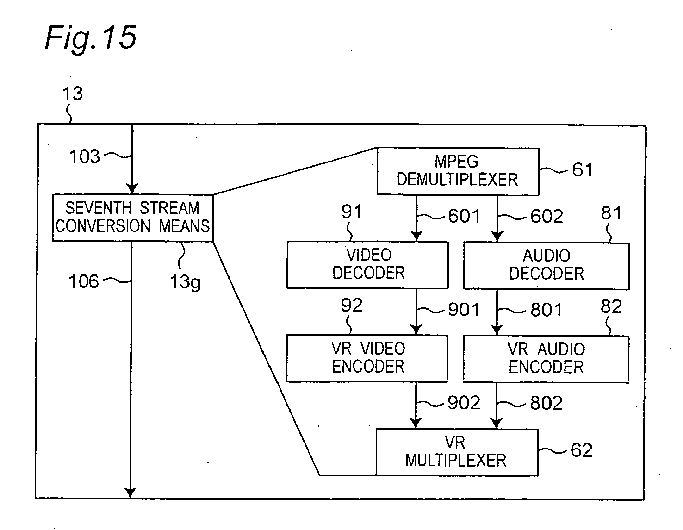

When both the video elementary stream and audio elementary stream of the input verified MPEG stream data 103 are incompatible with the VR format, the stream conversion unit 13 selects seventh stream conversion means 13g (corresponding to a VenderID of Vender_I in the correspondence table shown in Fig. 6A). This seventh stream conversion means 13g is described further with reference to Fig. 15.

The seventh stream conversion means 13g is composed of MPEG demultiplexer 61, VR multiplexer 62, audio decoder 81, VR audio encoder 82, video decoder 91, and VR video encoder 92.

The audio decoder 81 decodes the audio elementary stream 602 and outputs decoded audio data 801. The VR audio encoder 82 encodes the decoded audio data 801 and outputs VR audio elementary stream 802. The video decoder 91 decodes video elementary stream 601 and outputs decoded video data 901. The VR video encoder 92 encodes decoded video data 901 and outputs VR video elementary stream 902.

The MPEG demultiplexer 61 of seventh stream conversion means 13g demultiplexes the input verified MPEG stream data 103 to video elementary stream 601 and audio elementary stream 602. The video decoder 91 then decodes the video elementary stream 601, and the audio decoder 81 decodes the audio elementary stream 602. The decoded video data 901 is encoded to a VR video elementary stream 902 by the VR video encoder 92, and the decoded audio data 801 is encoded to a VR audio elementary stream 802 by the VR audio encoder 82. The VR multiplexer 62 then converts these elementary streams to the VR format, and outputs VR-compliant MPEG stream data 106.

If neither the video nor the audio portion of the input MPEG data file 101 is compatible with the VR format, the MPEG data file 101 can thus be converted to VR-format data by re-encoding both the video and audio portions.

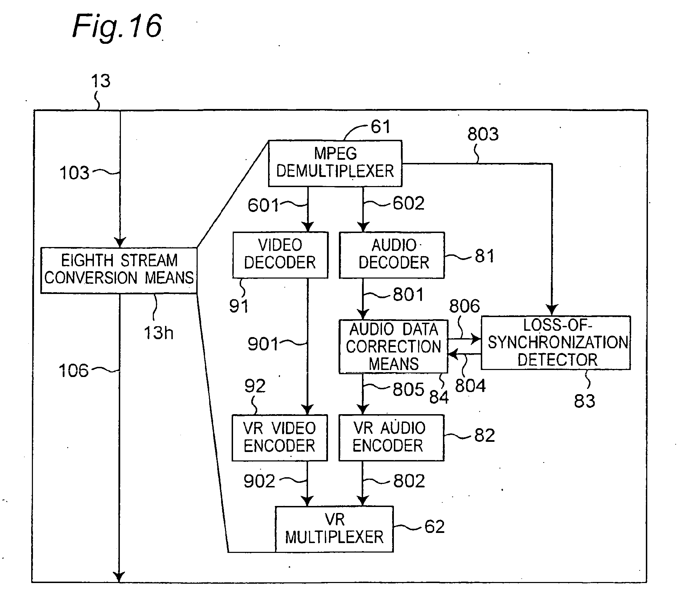

If the input verified MPEG stream data 103 is not compatible with the VR format on either the video or audio elementary stream level, and a loss of synchronization is also detected in the AV data, the stream conversion unit 13 selects the eighth stream conversion means 13h (equivalent to a VenderID of Vender_J in the correspondence table shown in Fig. 6A). This eighth stream conversion means 13h is described next with reference to Fig. 16.

The MPEG demultiplexer 61 of this eighth stream conversion means 13h demultiplexes the input verified MPEG stream data 103 to video elementary stream 601 and audio elementary stream 602, and outputs AV synchronization information 803 including the PTS enabling synchronous audio and video playback.

Based on the AV synchronization data 803, the loss-of-synchronization detector 83 detects a difference between the audio and video playback times, and outputs audio correction information 804. Based on the audio correction information 804, the audio data correction means 84 adjusts the decoded audio data 801 and outputs AV-synchronization-corrected audio data 805, that is, the decoded audio data 801 corrected for video synchronization. The VR audio encoder 82 then encodes this AV-synchronization-corrected audio data 805 to a VR audio elementary stream 802.

The video elementary stream 601 is likewise decoded by the video decoder 91. The decoded video data 901 is then encoded by the VR video encoder 92 to a VR video elementary stream 902. The VR video elementary stream 902 is then converted to a VR video stream, and VR-compliant MPEG stream data 106 is output.

When neither the video nor audio portions of the input MPEG data file 101 is compatible with the VR format and the video and audio may go out of synchronization, VR-format data with no loss of synchronization can be output by re-encoding the video and audio, and then adjusting the audio to the video data size.

The stream conversion unit 13 thus selects one of the stream conversion means 0 to 8, and converts the input MPEG data stream using the selected stream conversion means. The VR stream information detector 14 then gets the V.OBU and other management information required by the VR format from the VR-compliant MPEG stream data 106. A VR-compliant VRO file and IFO file are then created (S16).

It should be noted that the stream conversion means is determined based on the VenderID information by the stream conversion method determining means 12 in the embodiment described above, but the stream conversion means could be determined based on AV data attributes such as the MPEG file information, video information, and audio information. In this case a correspondence table relating the AV data attributes and stream conversion means can be used instead of the stream conversion means correspondence table shown in Fig. 6A.

Compatibility between the MPEG data file 101 and VR format is described next. MPEG files can be encoded according to various specifications. An MPEG data file 101 that is VR compliant is therefore described below.

The video elementary stream of an MPEG title is compatible with the VR format only for NTSC (PAL) resolutions of 720 x 480 (720 x 576), 704 x 480 (760 x 576), 352 x 480 (352 x 576), 352 x 240 (352 x 288), 544 x 480 (544 x 576), and 480 x 480 (480 x 576). The video elementary stream is also compatible with the VR format only when the video bitrate is 9.8 Mbps or less (MPEG-2), or 1.856 Mbps or less (MPEG-1).

The audio elementary stream is compatible with the VR format only if the audio compression method is AC3, MPEG-1, MPEG-2, or LPCM; the sampling' frequency is 48 kHz; the channel is channel 1 (1 ch) through 8 (8 ch); and the bitrate is 64 Kbps/80 Kbps/96 Kbps/112 Kbps/128 Kbps/10 Kbps/192 Kbps/224 Kbps/256 Kbps/320 Kbps/384 Kbps/448 Kbps/748 Kbps (LPCM)/1536 Kbps (LPCM).

Compatibility with VR format multiplexing is described next. The conditions for VR compatibility are that the pack size is fixed at 2048 bytes and the playback time from one system header to the next system header (VOBU) is at least 0.4 second and 1 second or less. All video and audio data must be completely contained in one VOBU, and the bitrate must be 10.08 Mbps or less for VR format compliance.

### Embodiment 2

An AV data conversion apparatus according to a second embodiment of the invention is described next. The first embodiment described above assumes the existence of a VR-compatibility verification file for the MPEG data file being processed. This second embodiment of the invention applies to a process used when a VR-compatibility verification file corresponding to the MPEG data file 101 does not exist.

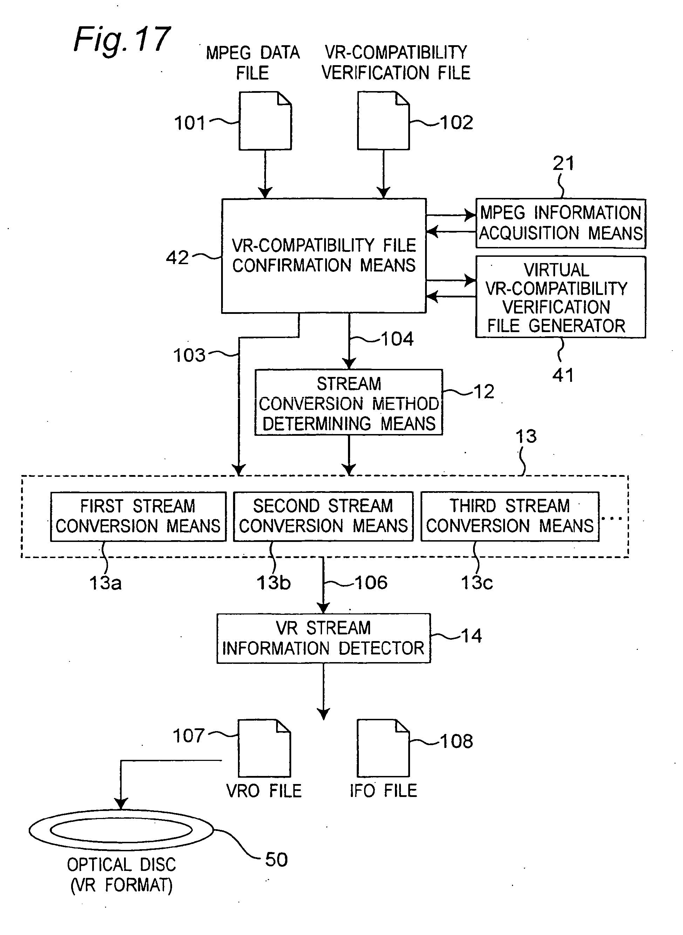

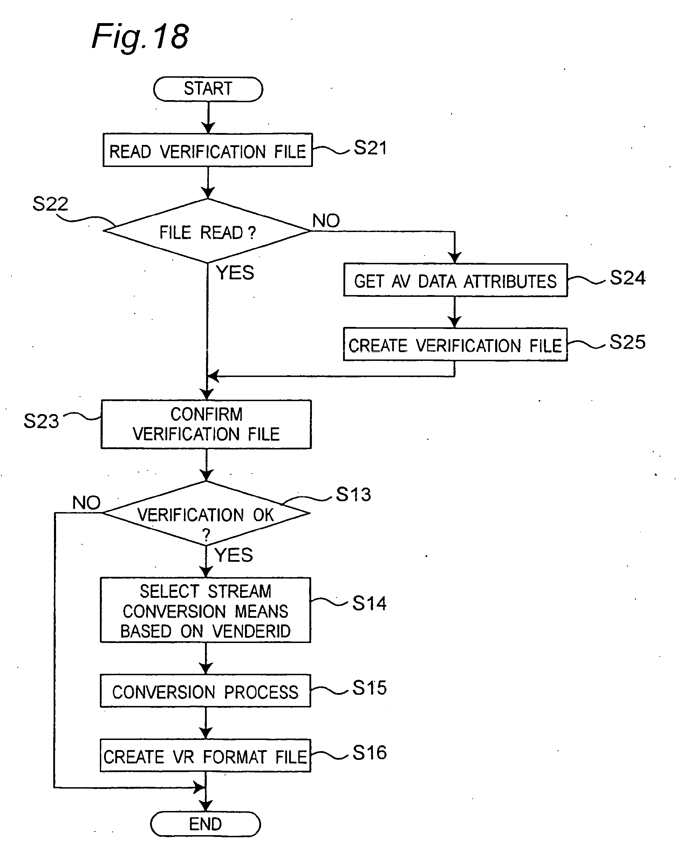

Fig. 17 is a block diagram showing the configuration of an AV data conversion apparatus according to a second embodiment of the invention. Like parts are identified by like reference numerals in Fig. 1 and Fig. 17, and further description thereof is thus omitted here. Fig. 18 is a flow chart showing the operation of this second embodiment. Steps identified by the same reference numeral in Fig. 4 and Fig. 18 perform the same operation, and further description thereof is this omitted here.

As shown in Fig. 17 this AV data conversion apparatus has an MPEG information acquisition means 21, a virtual VR-compatibility verification file generator 41, and a VR-compatibility file confirmation means 42. The MPEG information acquisition means 21 acquires file information and video and audio attribute data from the MPEG data file. The virtual VR-compatibility verification file generator 41 then creates a VR. format verification file based on the attributes acquired by the MPEG information acquisition means 21.

The operation of an AV data conversion apparatus according to this second embodiment of the invention is described below with reference to the flow chart shown in Fig. 18.

The VR-compatibility file confirmation means 42 first reads the MPEG data file and corresponding VR-compatibility verification file. If the VR-compatibility verification file is found, operation is the same as described in the first embodiment (S22, S23, S13 to S16), and further description thereof is thus omitted. If the VR-compatibility verification file cannot be read because there is no VR-compatibility verification file corresponding to the MPEG data file 101, for example, the MPEG information acquisition means 21 gets the AV data attributes including video attributes such as the file size, file creation date, the video resolution, and other video file information, and audio attributes such as the audio bitrate.

In addition to the file information, video information, and audio attributes acquired by the MPEG information acquisition means 21, the virtual VR-compatibility verification file generator 41 adds a virtual VenderID to these AV data attributes, and creates a VR-compatibility verification file such as shown in Fig. 5 (S25). The virtual VenderID assigned here is a reserved VenderID such as Vender_X.

The stream conversion method determining means 12 then selects stream conversion means X as the stream conversion means corresponding to Vender_X (S14). This stream conversion means X corresponds to seventh stream conversion means 13g or eighth stream conversion means 13h described in the first embodiment above, and encodes both the video and audio (S15).

The stream conversion unit 13 then applies stream conversion as described in the first embodiment, and the VR stream information detector 14 creates the VRO file and IFO file output as a VR format file (S16).

It is therefore possible to convert an MPEG data file to a VR format file by creating a virtual VR-compatibility verification file when only a MPEG data file is present.

The present invention can also be rendered as a computer program. This program can also be distributed via an electrical communications medium or recording medium so that the invention can be rendered using a computer.

Although the present invention has been described in connection with the preferred embodiments thereof with reference to the accompanying drawings, it is to be noted that various changes and modifications will be apparent to those skilled in the art. Such changes and modifications are to be understood as included within the scope of the present invention as defined by the appended claims, unless they depart therefrom.

## Claims

1. An audio-video data conversion apparatus comprising:
a verification file confirmation means for reading an audio-video data file containing audio-video data including video information and audio information, and a verification file denoting a compatibility of the audio-video data file with a video recording format, and for confirming if the audio-video data file and the verification file mutually correspond;
a plurality of stream conversion means for converting the audio-video data to a specific video recording format; and
a conversion method determining means for selecting from among said plurality of stream conversion means at least one stream conversion means for converting the audio-video data to a specific video recording format based on the compatibility information contained in said verification file.

2. An audio-video data conversion apparatus according to claim 1, further adapted to read a verification file which contains audio-video data attributes from when the audio-video data file was created;
wherein the verification file confirmation means comprises:
an audior-video data attribute extraction means for extracting audio-video data attributes from the read audio-video data file; and
a comparison means for comparing the audio-video data attributes extracted by the audio-video data attribute extraction means with the audio-video data attributes contained in the verification file; and
wherein the stream conversion means converts the audio-video data to the specified format only when the comparison means confirms an attribute match.

3. An audio-video data conversion apparatus according to claim 1 or 2, further adapted to read a verification file which contains VenderID information for uniquely identifying a device or software that created the audio-video data file; and
the stream conversion means determines at least one stream conversion means based on VenderID information.

4. An audio-video data conversion apparatus according to claim 2, wherein the verification file confirmation means further comprises a verification file creation means for creating a verification file containing audio-video data attributes acquired by the audio-video data attribute extraction means and specific VenderID information corresponding to the audio-video data attributes when a verification file corresponding to the audio-video data file cannot be read.

5. An audio-video data conversion method comprising:
a first step of reading an audio-video data file containing audio-video data including video information and audio information, and a verification file including compatibility information of the audio-video data file with a video recording format;
a second step of selecting at least one stream conversion method from among plural stream conversion methods for converting the audio-video data to a specific video recording format based on compatibility information contained in the verification file; and
a third step of converting the audio-video data to a specific format by means of the at least one selected stream conversion method.

6. An audio-video data conversion method according to claim 5, further comprising, after the first step and before the second step, a fourth step of confirming if the audio-video data file and verification file mutually correspond.

7. An audio-video data conversion method according to claim 6, further adapted to read a verification file which contains audio-video data attributes from when the audio-video data file was created;
wherein the fourth step further comprises:
a fifth step for extracting audio-video data attributes from the read audio-video data file, and a sixth step for comparing the audio-video data attributes extracted with the audio-video data attributes contained in the verification file; and
wherein the third step converts the audio-video data to the specified format only when a comparison result from the sixth step confirms an attribute match.

8. An audio-video data conversion method according to any one of claims 5 to 7, wherein the verification file contains VenderID information for uniquely identifying a device or software that created the audio-video data file; and
the second step selects the conversion method based on VenderID information.

9. A computer-readable recording medium storing a program for executing on a computer the steps of an audio-video data conversion method comprising a first step of reading an audio-video data file containing audio-video data including video information and audio information, and a verification file denoting a compatibility of the audio-video data file with the video recording format;
a second step of selecting at least one stream conversion method from among plural stream conversion methods for converting the audio-video data to the specific format based on the compatibility information contained in said verification file; and
a third step of converting the audio-video data to a specific format by means of the at least one selected stream conversion method.

10. An audio-video data conversion program for executing on a computer the steps of an audio-video data conversion method comprising:
a first step of reading an audio-video data file containing audio-video data including video information and audio information, and a verification file denoting a compatibility of the audio-video data file with the video recording format;
a second step of selecting at least one stream conversion method from among plural stream conversion methods for converting the audio-video data to the specific format based on the compatibility information contained in said verification file; and
a third step of converting the audio-video data to a specific format, by means of the at least one selected stream conversion method.

## Patentansprüche

1. Audio-Video-Datenkonvertierungsvorrichtung mit:
einem Verifizierungsdateibestätigungsmittel zum Lesen einer Audio-Video-Datendatel, die Audio-Video-Daten mit Videoinformation und Audioinformation aufweist, und einer Verifizierungsdatei, die eine Kompatibilität der Audio-Video-Datendatei mit einem Videoaufzeichnungsformat anzeigt, und zum Prüfen, ob die Audio-Video-Datendatei und die Verifizierungsdatei einander entsprechen;
einer Vielzahl von Datenstromkonvertierungsmitteln zum Konvertieren der Audio-Video-Daten in ein spezifisches Videoaufzeichnungsformat; und
einem Konvertierungsverfahrenbestimmungsmittel zum Auswählen wenigstens eines Datenstromkonvertierungsmittels aus der Vielzahl von Datenstromkonvertierungsmitteln zum Konvertieren der Audio-Video-Daten in ein spezifisches Videoaufzeichnungsformat basierend auf der Kompatibilitätsinformation, die in der Verifizierungsdatei enthalten ist.

2. Audio-Video-Datenkonvertierungsvorrichtung nach Anspruch 1, die ferner geeignet ist zum Lesen einer Verifizierungsdatei, welche Audio-Video-Datenmerkmale von dem Zeitpunkt aufweist, zu dem die Audio-Video-Datendatei generiert wurde;
wobei das Verifizierungsdateibestätigungsmittel aufweist:
ein Audio-Video-Datenmerkmalextraktionsmittel zum Extrahieren von Audio-Video-Datenmerkmalen von der gelesenen-Audio-Video-Datendatei; und
ein Vergleichsmittel zum Vergleichen der Audio-Video-Datenmerkmale, die durch das Audio-Video-Datenmerkmalextraktionsmittel extrahiert sind, mit den Audio-Video-Datenmerkmalen, die in der Verifizierungsdatei enthalten sind; und
wobei das Datenstromkonvertierungsmittel die Audio-Video-Daten nur dann das spezifische Format konvertiert, wenn das Vergleichsmittel eine Merkmalsübereinstimmung bestätigt.

3. Audio-Video-Datenkonvertierungsvorrichtung nach Anspruch 1 oder 2, die ferner zum Lesen einer Verifizierungsdatei geeignet ist, welche eine VenderID-Information zum eindeutigen Identifizieren einer Vorrichtung oder Software aufweist, die die Audio-Video-Datendatei generiert hat; und wobei
das Datenstromkonvertierungsmittel wenigstens ein Datenstromkonvertierungsmittel basierend auf der VenderID-Information bestimmt.

4. Audio-Video-Datenkonvertierungsvorrichtung nach Anspruch 2, wobei das Verifizierungsdateibestätigungsmittel ferner ein Verifizierungsdateigenerierungsmittel zum Generieren einer Verifizierungsdatei aufweist, die Audio-Video-Datenmerkmale, die durch das Audio-Video-Datenmerkmalextraktionsmittel erhalten sind, und eine spezifische VenderID-Information aufweist, die den Audio-Video-Datenmerkmalen entspricht, wenn eine Verifizierungsdatei, die der Audio-Video-Datendatei entspricht, nicht gelesen werden kann.

5. Audio-Video-Datenkonvertierungsverfahren mit:
einem ersten Schritt eines Lesens einer Audio-Video-Datendatei mit Audio-Video-Daten, die Videoinformation und Audioinformation aufweisen, und einer Verifizierungsdatei, die eine Kompatibilitätsinformation der Audio-Video-Datendatei mit einem Videoaufzeichnungsformat aufweist;
einem zweiten Schritt eines Auswählens wenigstens eines Datenstromkonvertierungsverfahrens aus mehreren Datenstromkonvertierungsverfahren zum Konvertieren der Audio-Video-Daten in ein spezifisches Videoaufzeichnungsformat basierend auf einer Kompatibilitätsinformation, die in der Verifizierungsdatei enthalten ist; und
einem dritten Schritt eines Konvertierens der Audio-Video-Daten in ein spezifisches Format mittels des wenigstens einen ausgewählten Datenstromkonvertierungsverfahrens.

6. Audio-Video-Datenkonvertierungsverfahren nach Anspruch 5, ferner mit, nach dem ersten Schritt und vor dem zweiten Schritt, einem vierten Schritt eines Prüfens, ob die Audio-Video-Datendatei und Verifizierungsdatei einander entsprechen.

7. Audio-Video-Datenkonvertierungsverfahren nach Anspruch 6, welches ferner zum Lesen einer Verifizierungsdatei geeignet ist, welche Audio-Video-Datenmerkmale von dem Zeitpunkt aufweist, zu dem als die Audio-Video-Datendatei generiert wurde;
wobei der vierte Schritt ferner aufweist:
einen fünften Schritt zum Extrahieren von Audio-Video-Datenmerkmalen von der gelesenen-Audio-Video-Datendatei und einen sechsten Schritt zum Vergleichen der Audio-Video-Datenmerkmale, die extrahiert sind, mit den Audio-Video-Datenmerkmalen, die in der Verifizierungsdatei enthalten sind; und
wobei der dritte Schritt die Audio-Video-Daten nur dann in das spezifische Format konvertiert, wenn ein Vergleichsergebnis aus dem sechsten Schritt eine Merkmalsübereinstimmung bestätigt.

8. Audio-Video-Datenkonvertierungsverfahren nach einem der Ansprüche 5 bis 7, wobei die Verifizierungsdatei eine VenderID-Information zum eindeutigen Identifizieren einer Vorrichtung oder Software aufweist, die die Audio-Video-Datendatei generiert hat; und
der zweite Schritt das Konvertierungsverfahren basierend auf einer VenderID-Information auswählt.

9. Computerlesbares Aufzeichnungsmedium, welches ein Programm zum Ausführen der Schritte eines Audio-Video-Datenkonvertierungsverfahrens auf einem Computer speichert, welches einen ersten Schritt eines Lesens einer Audio-Video-Datendatei mit Audio-Video-Daten, die Videoinformation und Audioinformation aufweisen, und einer Verifizierungsdatei aufweist, die eine Kompatibilität der Audio-Video-Datendatei mit dem Videoaufzeichnungsformat anzeigt;
einen zweiten Schritt eines Auswählens wenigstens eines Datenstromkonvertierungsverfahrens von mehreren Datenstromkonvertierungsverfahren zum Konvertieren der Audio-Video-Daten in das spezifische Format basierend auf der Kompatibilitätsinformation aufweist, die in der Verifizierungsdatei enthalten ist; und
einen dritten Schritt eines Konvertierens der Audio-Video-Daten in ein spezifisches Format mittels des wenigstens einen ausgewählten Datenstromkonvertierungsverfahrens aufweist.

10. Audio-Video-Datenkonvertierungsprogramm zum Ausführen der Schritte eines Audio-Video-Datenkonvertierungsverfahrens auf einem Computer mit:
einem ersten Schritt eines Lesens einer Audio-Video-Datendatei mit Audio-Video-Daten, die Videoinformation und Audioinformation aufweisen, und einer Verifizierungsdatei, die eine Kompatibilität der Audio-Video-Datendatei mit dem Videoaufzeichnungsformat anzeigt;
einem zweiten Schritt eines Auswählens wenigstens eines Datenstromkonvertierungsverfahrens von mehreren Datenstromkonvertierungsverfahren zum Konvertieren der Audio-Video-Daten in das spezifische Format basierend auf der Kompatibilitätsinformation, die in der Verifizierungsdatei enthalten ist; und
einem dritten Schritt eines Konvertierens der Audio-Video-Daten in ein spezifisches Format mittels des wenigstens einen ausgewählten Datenstromkonvertierungsverfahrens.

## Revendications

1. Appareil de conversion de données audio-vidéo comprenant :
un moyen de confirmation de fichier de vérification pour lire un fichier de données audio-vidéo contenant des données audio-vidéo incluant des informations vidéo et des informations audio, et un fichier de vérification indiquant une compatibilité du fichier de données audio-vidéo avec un format d'enregistrement vidéo, et pour confirmer si le fichier de données audio-vidéo et le fichier de vérification correspondent mutuellement l'un à l'autre:
une pluralité de moyens de conversion de flux pour convertir les données audio-vidéo à un format d'enregistrement vidéo spécifique ; et
un moyen de détermination de procédé de conversion pour sélectionner parmi ladite pluralité de moyens de conversion de flux au moins un moyen de conversion de flux pour convertir les données audio-vidéo à un format d'enregistrement vidéo spécifique sur la base des informations de compatibilité contenues dans ledit fichier de vérification.

2. Appareil de conversion de données audio-vidéo selon la revendication 1, adapté en plus pour lire un fichier de vérification qui contient des attributs de données audio-vidéo depuis la création du fichier de données audio-vidéo ;
dans lequel le moyen de confirmation de fichier de vérification comprend ;
un moyen d'extraction d'attributs de données audio-vidéo pour extraire des attributs des données audio-vidéo du fichier de données audio-vidéo lu ; et
un moyen de comparaison pour comparer les attributs des données audio-vidéo extraits par le moyen d'extraction d'attributs des données audio-vidéo à des attributs de données audio-vidéo contenus dans le fichier de vérification ; et
dans lequel le moyen de conversion de flux convertit les données audio-vidéo à un format spécifié seulement lorsque le moyen de comparaison confirme un concordance d'attributs.

3. Appareil de conversion de données audio-vidéo selon la revendication 1 ou 2, adapté en plus pour lire un fichier de vérification qui contient des informations VenderID pour identifier de manière unique un dispositif ou un logiciel qui a crée le fichier de données audio-vidéo ; et
le moyen de conversion de flux détermine au moins un moyen de conversion de flux sur la base des informations VenderID.

4. Appareil de conversion de données audio-vidéo selon la revendication 2, dans lequel le moyen de confirmation de fichier de vérification comprend en plus un moyen de création de fichier de vérification pour créer un fichier de vérification contenant des attributs de données audio-vidéo acquis par le moyen d'extraction d'attributs de données audio-vidéo et des informations venderID spécifiques correspondant aux attributs de données audio-vidéo lorsqu'un fichier de vérification correspondant au fichier de données audio-vidéo ne peut pas être lu.

5. Procédé de conversion de données audio-vidéo comprenant :
une première étape de lecture du fichier de données audio-vidéo contenant des données audio-vidéo incluant des informations vidéo et des informations audio, et un fichier de vérification incluant des informations de compatibilité du fichier de données audio-vidéo avec un format d'enregistrement vidéo ;
une deuxième étape de sélection d'au moins un procédé de conversion de flux parmi plusieurs procédés de conversion de flux pour convertir les données audio-vidéo à un format d'enregistrement vidéo spécifique sur la base des informations de compatibilité contenues dans le fichier de vérification ; et
une troisième étape de conversion des données audio-vidéo à un format spécifique au moyen du au moins un procédé de conversion de flux sélectionné.

6. Procédé de conversion de données audio-vidéo selon la revendication 5, comprenant en plus, après la première étape et avant la deuxième étape, une quatrième étape qui consiste à confirmer si le fichier de données audio-vidéo et le fichier de vérification se correspondent mutuellement.

7. Procédé de conversion de données audio-vidéo selon la revendication 6, adapté en plus pour lire un fichier de vérification qui contient des attributs de données audio-vidéo depuis la création du fichier de données audio-vidéo ;
dans lequel la quatrième étape comprend en plus :
une cinquième étape pour extraire des attributs de données audio-vidéo du fichier de données audio-vidéo lu, et une sixième étape pour comparer les attributs de données audio-vidéo extraits aux attributs de données audio-vidéo contenus dans le fichier de vérification ; et
où la troisième étape convertit les données audio-vidéo au format spécifié seulement lorsqu'un résultat de comparaison depuis la sixième étape confirme une concordance d'attributs.

8. Procédé de conversion de données audio-vidéo selon l'une quelconque des revendications 5 à 7, dans lequel le fichier de vérification contient des informations venderID pour identifier de manière unique un dispositif ou un logiciel qui a crée le fichier de données audio-vidéo ; et
la deuxième étape sélectionne le procédé de conversion sur la base des informations venderID.

9. Support d'enregistrement lisible par ordinateur stockant un programme pour exécuter sur un ordinateur les étapes d'un procédé de conversion de données audio-vidéo comprenant une première étape de lecture d'un fichier de données audio-vidéo contenant des données audio-vidéo incluant des informations vidéo et des informations audio, et un fichier de vérification indiquant une compatibilité du fichier de données audio-vidéo avec le format d'enregistrement vidéo ;
une deuxième étape de sélection d'au moins un procédé de conversion de flux parmi plusieurs procédés de conversion de flux pour convertir les données audio-vidéo au format spécifique sur la base des informations de compatibilité contenues dans ledit fichier de vérification ; et
une troisième étape de conversion des données audio-vidéo à un format spécifique au moyen du au moins un procédé de conversion de flux sélectionné.

10. Programme de conversion de données audio-vidéo pour exécuter sur un ordinateur les étapes d'un procédé de conversion de données audio-vidéo comprenant ;
une première étape de lecture d'un fichier de données audio-vidéo contenant des données audio-vidéo incluant des informations vidéo et des informations audio, et un fichier de vérification indiquant une compatibilité du fichier de données audio-vidéo avec le format d'enregistrement vidéo ;
une deuxième étape de sélection d'au moins un procédé de conversion de flux parmi plusieurs procédés de conversion de flux pour convertir les données audio-vidéo au format spécifique sur la base des informations de compatibilité contenues dans ledit fichier de vérification ; et
une troisième étape de conversion des données audio-vidéo à un format spécifique au moyen du au moins un procédé de conversion de flux sélectionné.
